# EUROPEAN PATENT APPLICATION

(11) **EP 1 136 445 A1**
(43) Date of publication of application: **26.09.2001**
(21) Application number: 01302621.6
(22) Date of filing: 21.03.2001
(51) Int. Cl.: C01F 17/00, F25B 9/14

(54) **Oxidic regenerator material and regenerator comprising the material**

(30) Priority: 21.03.2000 JP 2000078973
(71) Applicant: Japan as represented by Director General of, Tsukuba-shi, Ibaraki 305-0047 (JP)
(72) Inventor: Numazawa, Takenori, Tsukuba-shi, Ibaraki (JP); Wada, Hitoshi, Tsukuba-shi, Ibaraki, (JP); Sato, Akio, Tsukuba-shi, Ibaraki, (JP)
(74) Representative: Calamita, Roberto

(57) **Abstract**

An oxide regenerator material, which has a nominal composition of MₓAl₂₋ₓO₃, wherein M is one or more rare earth elements and x is a number which meets an inequality expressed 1≦x≦1.5.

## Description

The present invention relates to an oxide regenerator material and a regenerator. More particularly, the present invention relates to a noble oxide regenerator material, which has large heat capacity under cryogenic environments at 2K as well as near 4K, has large magnetic specific heat by unit volume, and can be easily produced, and a regenerator in which the oxide regenerator material is filled.

Refrigerating capacity and a destination temperature of compact gas refrigerators, which can generate liquid helium temperature (4.2K) depends on ability of regenerator materials used for refrigerators. One of the requirements for the regenerator materials is that the materials has the same heat capacity as helium refrigerant passing through regenerators has or larger.

In general, rare earth intermetallic compounds represented by R_{X}M (R=Er, Ho, Dy, or the like, and M=Ni, Al, or the like) have been used for regenerator materials. The rare earth intermetallic compounds are effective materials for regenerator materials because they have large heat capacity in the temperature range near from 20K to 5K. However, their heat capacity drastically decreases by 0.2J/ccK or smaller at 4K or lower. Accordingly, in the case where the rare earth intermetallic compounds are used in refrigerators, refrigerating capacity of the refrigerators deteriorates and the destination temperature is at most 3K. Those defects are based on the facts that rare earth intermetallic compounds are substances with strong magnetic interaction and that since almost all of the rare earth intermetallic compounds have a magnetic transition temperature at 4K or higher, they do not have so sufficient magnetic specific heat as they can be used for regenerator materials under 4K.

As a superconducting technology is, on the other hand, practically used, cryogenic environments are needed. Besides, the temperature range of 4.2K or lower is also necessary in various industrial fields and R & D such as for cooling sensors. According to those, cool storage materials, which can easily realize cryogenic environments, are required.

In order to meet the requirement, several R & D has been made. However, objective substances for development have been limited to a simple of rare earth metals or 3d transition metals and their alloys, intermetallic compounds or amorphous alloys.

Now, the present invention will become more apparent upon a reading of the following detailed specification and drawings. in which:
Fig. 1 is a graph showing heat capacity per unit volume of an oxide regenerator material of the present invention, helium, and conventional regenerator materials;
Fig. 2 is a structural figure illustrating a pulse tube refrigerator;
Fig. 3A is a structural figure illustrating a conventional regenerator;
Fig. 3B is a structural figure illustrating a regenerator in which a GdAlO₃ regenerator material is filled;
Fig. 4 is a graph showing refrigerating capacity of a conventional regenerator (A) and a regenerator in which a GdAlO₃ regenerator material is filled (B); and
Fig. 5 is a graph showing ratios of refrigerating capacity of a regenerator in which the GdAlO₃ was filled against refrigerating capacity of a conventional regenerator.

The present invention provides an oxide regenerator material, characterized by a nominal composition of MₓAl₂₋ₓO₃, wherein M is one or more rare earth elements and x is a number which meets an inequality expressed 1≦x≦1.5.

An oxide cool storage material according to the present invention is characterized by a nominal composition of MₓAl₂₋ₓO₃, wherein M is one or more rare earth elements and x is a number which meets an inequality expressed 1≦x≦1.5.

As a rare earth element, La, lanthanide, and Sc and Y belonging to the same family as La does are exemplified, but preferably, one or more heavy rare earth elements in which elements from Gd to Lu in the periodic table are used.

The MₓAl₂₋ₓO₃ is a composite oxide made of one or more rare earth elements above-mentioned and Al. For example, GdₓAl₂₋ₓO₃, Hoₓ₁Gdₓ₂Al₂₋ₓO₃, or the like is exemplified. More specifically, Gd_{1.5}Al_{0.5}O₃ and DyAlO₃ are exemplified.

Those composite oxides are easily obtained by sintering each of rare earth oxide powders and Al₂O₃ powders. Raw powders with an average diameter of 50*µ*m or smaller can be used for sintering. From the viewpoint of sintering conditions or the like, it is desirable to use powders with an average diameter of 1*µ*m or smaller. The powders with a stoichiometric ratio are mixed. The ratio is decided so as to meet M:A1=x:2-x in the nominal composition above-mentioned and the above-mentioned inequality, which is expressed 1≦x≦1.5. Various processes are considered for sintering. For example, a pellet is formed by compressing the mixed powders and is subsequently heat-treated at about from 1750°C to 1800°C for several hours. The process can realize a regenerator material, which is made of the MₓAl₂₋ₓO₃ oxide.

The MₓAl₂₋ₓO₃ oxide regenerator material has a magnetic transition temperature near 4K, is little influenced by crystal fields or the like, and therefore has large heat capacity even in a cryogenic range of 4.2K or lower.

In the case where a ratio x of rare earth elements M is 1 or larger, MA1O₃ single phases or mixed crystals that M₂O₃ phases are precipitated in MAlO₃ phases can be formed. It has been known that the MAlO₃ single crystal has large heat capacity at low temperatures, but the MAlO₃ polycrystalline obtained has the same specific heat characteristic as the single crystal has, i.e., large heat capacity. Besides, the mixed crystals permits a specific heat peak near 2K, which is derived from the M₂O₃ phase, as well as a specific heat peak near 4K, which is derived from the MAlO₃. In the case of x<1, those effects are not be obtained. In the case of x>1.5, specific heat characteristic of the MAlO₃ is reduced. Consequently, the condition, i.e., 1≦x≦1.5, is important.

The oxide regenerator material of the present invention has a perovskite structure and containing ratio of rare earth elements by unit cell is larger than that of garnet or garnet-like oxides. This results in large magnetic specific heat by unit volume.

Further, since the oxide regenerator material of the present invention can be easily produced as a polycrystalline, a sintering process design, for example, can realize various structures. As above-mentioned, specific heat characteristic of the polycrystalline is quite similar to that of the single crystal. Consequently, thermal conductivity of the oxide regenerator material of the present invention is predicted to be larger by several times than those of conventional intermetallic compounds.

The present invention can realize an oxide regenerator material, which has large heat capacity under cryogenic environments at from 4.2K to 2K, has large magnetic specific heat by unit volume, and can be easily produced.

The present invention also provides a regenerator, characterized in that said oxide regenerator material is filled in.

In order to preserving low temperatures, the oxide regenerator material above-mentioned is filled in a regenerator. In the case where the oxide regenerator material is formed into a pellet, the pellet can be milled according to a using object, for example. The powder size of the oxide regenerator material for a regenerator is not particularly restricted. The powder size can correspond to the powder size of the conventional regenerator material for a regenerator, i.e., from 300 *µ*m to 500*µ*m in average. From the viewpoint of practical use, powders with a size range or from 100 *µ*m to 500 *µ*m can be used without any problem.

The oxide regenerator material can be used for all of the regenerator materials of a regenerator or can be used for a part of them. In the case where the oxide regenerator material is partially used in a regenerator, the conventional regenerator materials can be used for the rest. A magnetic regenerator material such as lead that has large heat capacity at low temperatures, ErNi. or HoCu₂ is exemplified.

As above-mentioned, the oxide regenerator material of the present invention has large heat capacity not only near 4K but also near 2K, has large magnetic specific heat by unit volume, and can be easily produced.

Therefore, a regenerator that is compact and has high refrigerating capacity under cryogenic environments at 4.2K or lower, a lower destination temperature and a high refrigerating efficiency can be easily produced.

A cold storage refrigerator has been paid attention to as a device for generating low temperatures. Cryogenic environments can be easily realized by furnishing a regenerator of the present invention. The regenerator can be utilized for a superconducting magnet, a refrigerator for cooling an MRI, or the like.

Now, the present invention will be described more in detail by way of examples.

### (Example 1)

Gd₂O₃ and Al₂O₃ powders with an average diameter of 1 *µ* m or smaller were used for starting raw materials and were mixed in quantity, i.e., a stoichiometric ratio, so as to form GdAlO₃. The mixed powders were cold-pressed with a press machine under the pressure of about 1t/cm² at room temperature in the air to be formed into a pellet. The pellet was subsequently heat-treated at from 1750°C to 1800°C in a furnace under atmosphere for an hour.

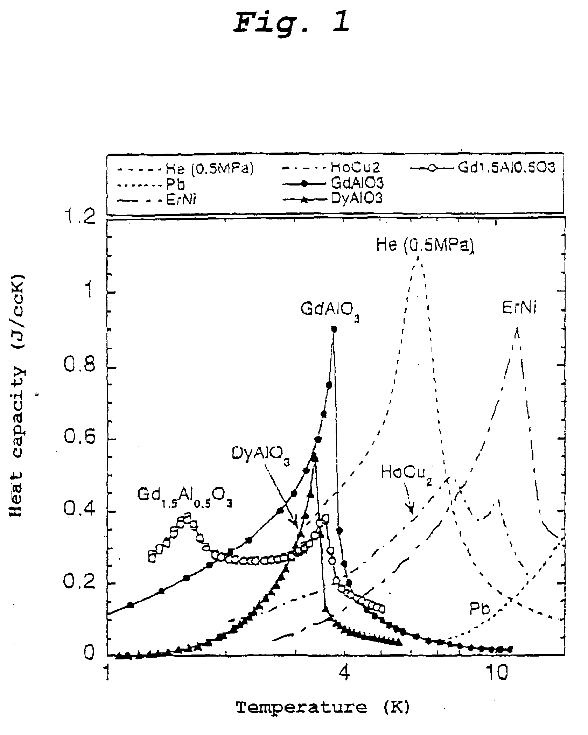

From the results of an X-ray analysis and a specific heat measurement, it was confirmed that the obtained substance was a polycrystalline made of GdAlO₃ single phases. The results of heat capacity measurement of the GdAlO₃ polycrystalline were shown in Fig. 1 as GdAlO₃. In Fig. 1, heat capacity of helium (He-0.5Mpa), which is one of the general refrigerants, and of Pb, ErNi, and HoCu₂, which have been known as a conventional regenerator material, are shown.

From Fig. 1, it was confirmed that GdAlO₃ exhibits extremely large heat capacity near 4K and has larger heat capacity than helium has. Its heat capacity preserves high values of 0.2J/ccK or higher even near from 4K to 2K.

Though specific heat of a GdAlO₃ single crystal has been known, it is for the first time that the GdAlO₃ polycrystalline is a useful for a cryogenic magnetic regenerator material.

On the other hand, heat capacity of the GdAlO₃ is not large at 5K or higher. Consequently, combination of the conventional regenerator materials with the GdAlO₃ will possibly obtain a regenerator material that can be used in a wide temperature range.

### (Example 2)

Dy₂O₃ and Al₂O₃ powders were used for starting raw materials and were mixed in a stoichiometric ratio so as to form DyAlO₃. A regenerator material was produced under the same conditions as in Example 1.

From an X-ray analysis, it was confirmed that the DyAlO₃ regenerator material obtained is a polycrystalline made of DyAlO₃ single phases.

The results of heat capacity measurement of the DyAlO₃ regenerator material were shown in Fig. 1 as DyAlO₃. It was confirmed that the DyAlO₃ regenerator material exhibits large heat capacity of about 0.6J/ccK near 3K. Specific heat of the DyAlO₃ regenerator material is smaller than that of the GdAlO₃, but its heat capacity at 4K or lower is larger than those of the conventional regenerator materials.

### (Example 3)

The quantity of the starting raw materials used in Example 1 was changed so as to form Gd_{1.5}Al_{0.5}O₃ (x=1.5) and a regenerator material was produced under the same conditions as in Example 1.

From an X-ray analysis, it was confirmed that the Gd_{1.5}Al_{0.5}O₃ regenerator material obtained is made of mixed crystals that Gd₂O₃ phases are precipitated in GdAlO₃ phases.

The results of heat capacity measurement of the Gd_{1.5}Al_{0.5}O₃ regenerator material were shown in Fig. 1 as Gd_{1.5}Al_{0.5}O₃. It was confirmed that the Gd_{1.5}Al_{0.5}O₃ regenerator material exhibits large heat capacity of 0.2J/ccK or larger near from 4K to 1.5K and has two peaks, one of which is at 4K and the other at 2K.

### (Example 4)

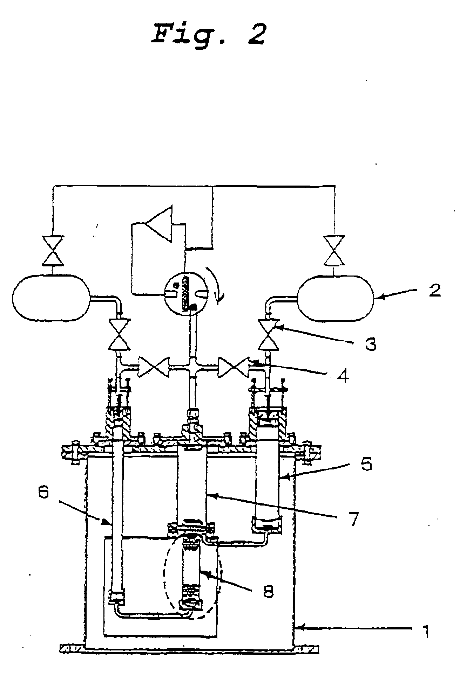

The GdAlO₃ regenerator material obtained in Example 1 was milled and further worked into sphere-shaped powders with a rotating drum. Granulated powders of which diameter distributed from about 133 *µ*m to 500 *µ*m were collected by screening of the worked powders. Refrigerating characteristics of the granulated GdAlO₃ powders were examined with a pulse tube refrigerator (1) of which consumption electric power is 3.3kW and which is shown in Fig. 2.

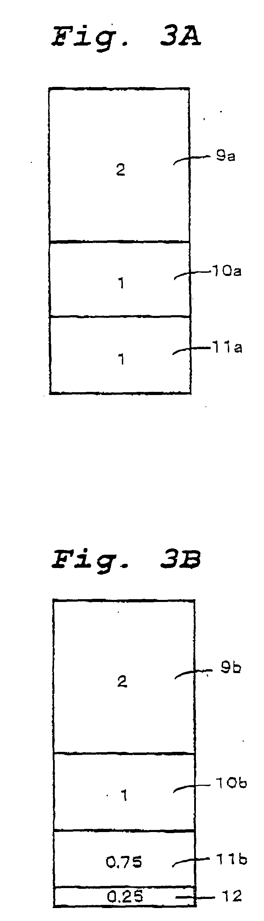

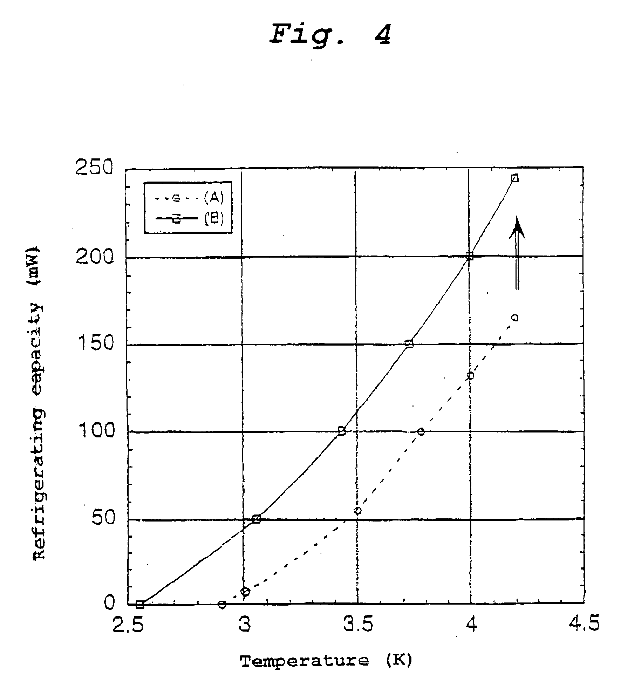

The 1^{st} and 2^{nd} regenerator units (7,8) were provided with the refrigerator (1). The 1^{st} regenerator unit (7), which was situated at higher temperatures, was made of stainless steel and the regenerator material was filled in the 2^{nd} regenerator unit (8), which was situated at lower temperatures and is shown as a dotted line region in Fig. 2. The structure of the 2^{nd} regenerator unit (8) is shown in Fig. 3A. Lead (9a), ErNi (10a), and HoCu₂ (11a) were filled in the 2^{nd} regenerator unit (8) in order of a higher temperature. volume ratio of them was 2:1:1. Refrigerating characteristics were examined and shown in Fig. 4 as (A). From Fig. 4, in the refrigerator, refrigerating capacity at 4.2K was about 165mW and destination temperature at no-load was about 2.9K.

The 25-volume % of the HoCu₂ regenerator material (11a), which was situated at the lower temperature side, was substituted with the GdAlO₃ regenerator material above-mentioned. Refrigerating characteristics were examined. The structure of the latter regenerator and refrigerating characteristics of the refrigerator furnishing the latter regenerator were shown in Fig. 3B and in Fig. 4 as (B), respectively.

From Fig. 4, it was confirmed that refrigerating characteristics are apparently improved by the regenerator in which the GdAlO₃ regenerator material of the present invention was filled. Refrigerating capacity of 244mw was obtained at 4.2K. Besides, destination temperature at no-load was lowered to 2.55K.

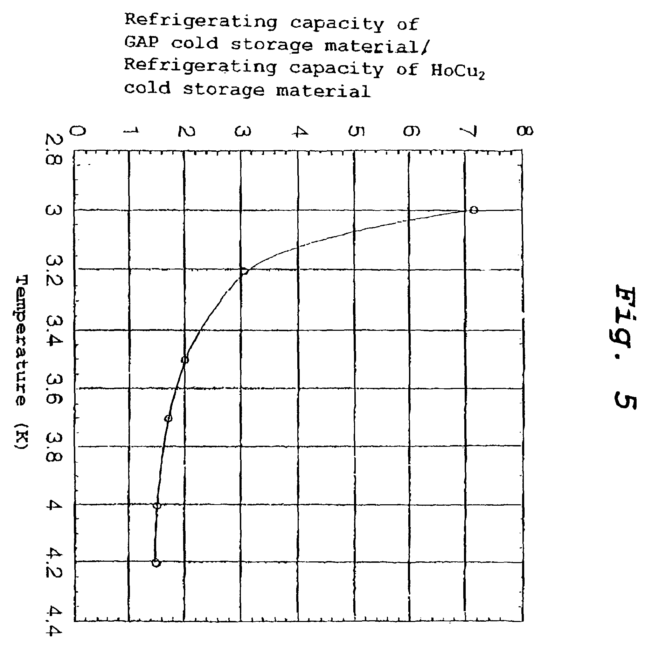

From Fig. 5, it was confirmed that the regenerator of the present invention has larger refrigerating capacity at 4.2K by about 1.5 times than the conventional regenerator has. It was also confirmed that the ratio of refrigerating capacity increases as temperature decreases and that refrigerating capacity of the regenerator of the present invention achieves larger by 7 times than that of the conventional one.

It is apparent from the above that refrigerating characteristics of a refrigerator will be improved by using the regenerator material of the present invention. Especially, larger refrigerating capacity at 4.2K will bring about remarkable improvement in functions of a superconducting magnet or the like.

In Figs. 2, 3A and 3B, other symbols represent as follows:
2 Storage tank
3 Discharge valve
4 Double pouring valve
5 1^{st} pulse tube
6 2^{nd} pulse tube
9b Lead regenerator material
10b ErNi regenerator material
11b HoCu₃ regenerator material
12 GdAlO₃ oxide regenerator material

of course, the present invention is not restricted to examples above-mentioned. It is needless to mention that various modifications are possible.

## Claims

1. An oxide regenerator material, **characterised by** a nominal composition of MₓAl₂₋ₓO₃, wherein M is one or more rare earth elements and x is a number which satisfies the inequality 1≤x≤1.5.

2. A material as claimed in claim 1 wherein M is one or more elements selected from the set of lanthanum, a lanthanide, scandium and yttrium.

3. A material as claimed in claim 1 or claim 2 wherein M is one or more elements selected from the set of Gd, Tb, Dy, Ho, Er, Tm, Yb and Lu.

4. A material as claimed in any of claims 1 to 3 **characterised by** a nominal composition chosen from the set of GdAlO₃, Gd_{1.5}Al_{0.5}O₃ and DyAlO₃.

5. A regenerator, **characterised in that** it is filled with a material comprising an oxide regenerator material as claimed in any previous claim.
